# EUROPÄISCHE PATENTSCHRIFT

(11) **EP 2 416 024 B1**
(45) Veröffentlichungstag und Bekanntmachung des Hinweises auf die Patenterteilung: **06.09.2017**
(21) Anmeldenummer: 11006210.6
(22) Anmeldetag: 28.07.2011
(51) Int. Cl.: F16C 29/08, F16C 29/06

(54) **Linearwälzlager**
Linear roller bearing
Palier à roulement linéaire

(30) Priorität: 03.08.2010 DE 102010033219
(43) Veröffentlichungstag der Anmeldung: 08.02.2012
(73) Patentinhaber: EXXELLIN Verwaltungs-GmbH & Co.KG, 39326 Wolmirstedt (DE)
(72) Erfinder: Greiner, Heinz, 73061 Ebersbach (DE)
(74) Vertreter: Witte, Weller & Partner Patentanwälte mbB

(56) Entgegenhaltungen:
- EP-A1- 1 199 485
- WO-A1-00/60247
- DE-A1- 4 210 039

## Beschreibung

Die Erfindung bezieht sich auf ein Linearwälzlager mit den Merkmalen im Oberbegriff des Anspruchs 1. Ein Stand der Technik dazu ist in DE 42 10 039 A1 offenbart. Es sind Linearwälzlager dieser Art bekannt, bei denen die Einzelsegmente von einem Gehäuse umgeben sind, das seinerseits über Reibschluss z. B. in einer Aufnahmebohrung eines Aufnahmebauteils befestigt wird. Diese Gehäuse weisen üblicherweise Längsstege auf, die parallel zu den Tragplatten verlaufen und zwischen den Einzelsegmenten hindurchführen. Dadurch wird für den Umlauf der Wälzkörper Bauraum verloren, der sich in engen Umlenkradien, eingeschränkter Einstellbarkeit, kleineren Wälzkörpern als wünschenswert und damit reduzierter Tragfähigkeit und dadurch auch in einem Mangel an Beschleunigung, an höherem Geräusch und verminderter Lebensdauer bemerkbar macht.

Bekannt sind ferner nicht einstellbare Linearwälzlager, bei denen die Einzelsegmente aneinander anliegen, wobei über Federringe eine radial nach innen gerichtete Kraft ausgeübt wird. Solche Linearwälzlager müssen in ihrer Umgebung über separate Hilfsmittel in einer Nut gehalten werden.

WO 00/60247 offenbart ein Linearwälzlager mit Kugelhaltern, die aus monolithisch ausgebildeten inneren und äußeren Abschnitten bestehen, die am Ende miteinander befestigt sind.

Der Erfindung liegt die Aufgabe zugrunde, ein Lineanuälzlager der eingangs genannten Art so auszubilden, dass sich eine selbsthaltende Lagerbüchse ergibt, wobei der zur Verfügung stehende Bauraum maximal ausgenutzt ist dadurch, dass größtmögliche Wälzkörper zum Einsatz kommen können, die dem Linearwälzlager große Tragfähigkeit und leichtgängiges ruhiges Laufverhalten verleihen, wobei die Einzelsegmente voneinander unabhängig selbsttätig einstellbar sind und dadurch beim bestimmungsgemäßen Gebrauch die Last auf die einzelnen Laufbahnen und Wälzkörperreihen möglichst gleichmäßig verteilt wird.

Die Aufgabe ist bei einem Linearwälzlager der eingangs genannten Art gemäß der Erfindung durch die Merkmale im Anspruch 1 gelöst. Weitere vorteilhafte Erfindungsmerkmale und Ausgestaltungen ergeben sich aus den Unteransprüchen. Durch die Erfindung ist eine selbsthaltende Lagerbüchse geschaffen, bei der der zur Verfügung stehende Bauraum maximal dadurch genutzt ist, dass größtmögliche Wälzkörper zum Einsatz kommen können. Diese verleihen dem Linearwälzlager große Tragfähigkeit und ein leichtgängiges ruhiges Laufverhalten. Die Einzelsegmente können sich unabhängig voneinander selbsttätig einstellen, so dass beim bestimmungsgemäßen Gebrauch die Last exakt auf die einzelnen Laufbahnen und Wälzkörperreihen verteilt wird.

Von Vorteil ist, dass die Halteelemente als Ringe ausgebildet sind, die mit radialem Spiel formschlüssig an den Käfigelementen angreifen, und zwar radial von außen her. Dadurch ist eine selbsttätige Anpassbarkeit der Käfigelemente, die die Tragplatten halten, in Radialrichtung gegeben. Die Halteelemente können mit einem radialen Schenkel unter Belassung eines radialen Zwischenraumes in eine als äußere Umfangsnut ausgebildete Eintiefung der Käfigelemente eingreifen.

Von Vorteil kann es ferner sein, wenn der Außendurchmesser der Halteelemente größer bemessen ist als derjenige der Käfigelemente und/oder der Tragplatten. Die Halteelemente können im Querschnitt etwa U-förmig sein mit radial nach innen weisenden Schenkeln, von denen einer vorzugsweise mit radialem Spiel in die Umfangsnuten der Käfigelemente eingreift und der andere vorzugsweise mit radialem Spiel endseitige Abschlussdeckel übergreift. Die Halteelemente können in vorteilhafter Weise eine solche äußere Umfangsfläche aufweisen, die, im radialen Schnitt betrachtet, geradlinig ist oder radial nach außen konvex gestaltet ist oder radial nach innen konkav gekrümmt ist. Die äußere Umfangsfläche der Halteelemente ist dabei als äußere Anlagefläche für eine kraftschlüssige und/oder formschlüssige Halterung innerhalb eines Aufnahmebauteils für das Linearwälzlager ausgebildet. Eine z. B. konvex gekrümmte äußere Umfangsfläche des Halteelements kann formschlüssig in zugeordnete konkav gekrümmte Aufnahmeflächen eines Aufnahmebauteils eingreifen, wodurch sich eine zusätzliche Sicherung der Halterung über Formschluss ergibt. Eine statt dessen konkav gekrümmte äußere Umfangsfläche der Halteelemente kann mit konvex gekrümmten Aufnahmeflächen innerhalb eines Aufnahmebauteils zur zusätzlichen Sicherung durch Formschluss zusammenwirken.

Die Halteelemente können aus Kunststoff bestehen oder aus Metall, z. B. Stahl.

Von Vorteil kann es sein, wenn endseitige Abschlussdeckel, die z. B. zum Schutz von Dichtungen dienen, zumindest axial an den Käfigelementen anliegen. Eine besonders vorteilhafte Ausführungsform sieht vor, dass die Abschlussdeckel mit den Halteelementen einstückige Bauteile bilden und auf einem Teilbereich wie die Halteelemente ausgebildet sind. Dann liegt an den Stirnenden der Käfigelemente nur ein einziges Bauteil an. Die Halteelemente, insbesondere diese einstückigen Bauteile, können nasenartig axial vorspringende innere Ringe aufweisen, die vorzugsweise mit radialem Spiel in stirnseitige offene Aufnahmen, z. B. Nuten, der Käfigelemente eingreifen und die Einzelsegmente positionieren. Diese Ringe können starr ausgebildet sein, wobei im Zusammenwirken mit radialem Spiel eine Einstellung der Käfigelemente möglich ist. Statt dessen können die Ringe vorzugsweise auch elastisch beweglich ausgebildet sein und dadurch zusätzliche Bewegungen der Käfigelemente möglich machen.

Von Vorteil kann es ferner sein, wenn an den Stirnenden der Käfigelemente Ringelemente aus Kunststoff oder Metall vorgesehen sind, die von der Stirnseite her in stirnseitig offene, bogenförmig verlaufende Nuten der Käfigelemente eingebracht sind. Dabei können die Ringelemente und/oder die Nuten derart ausgebildet sein, dass darüber die Käfigelemente derart radial abgestützt sind, dass die Tragplatten kippbeweglich sind. Die Käfigelemente sind mit den Tragplatten dabei in Umfangsrichtung festgelegt.

Eine weitere vorteilhafte Ausführungsform sieht vor, dass das jeweilige Ringelement etwa mit Dreipunktauflage an den Nutflanken der zugeordneten Nut anliegt. Dabei kann das jeweilige Ringelement in den Nuten der einzelnen Käfigelemente im Bereich der beiden Nutenden in Bezug auf den Nutverlauf radial nach innen gerichtet sein und an den inneren Nutflanken anliegen und auf dem zwischen beiden Nutenden befindlichen mittleren Bereich an den äußeren Nutflanken anliegen. Dadurch sind die einzelnen Käfigelemente durch das jeweilige Ringelement positioniert, so, dass die Käfigelemente auch in Umfangsrichtung dadurch ausgerichtet sind. Das jeweilige Ringelelement kann auf dem Umfangsbereich zwischen zwei benachbarten Käfigelementen in radialer Richtung aus einem Kreisverlauf herausgebogen sein. Dies dient einmal der Erzeugung der Dreipunktanlage und führt zum anderen dazu, dass auch durch diese Formgebung die Käfigelemente in Umfangsrichtung positioniert sind.

Eine weitere vorteilhafte Ausführungsform sieht vor, dass das jeweilige Ringelement und die Nut einen vieleckigen, z. B. viereckigen, Querschnitt aufweist. Von Vorteil ist es, wenn das Ringelement im wesentlichen spannungsfrei in die zugeordnete Nut eingelegt ist.

Vorteilhaft kann es sein, wenn jedes Käfigelement geteilt ausgebildet ist und ein radial inneres Käfigelement aufweist, das je Traglaufbahn der Tragplatte einen Längsschlitz für die radial hindurch zur jeweiligen Traglaufbahn reichenden, sich entlang der Traglaufbahn abwälzenden Wälzkörper und in Umfangsrichtung beidseitig über die Tragplatte überstehende Abschnitte aufweist. Das geteilte Käfigelement kann ein radial äußeres Käfigelement aufweisen, das mit einem Rand beidseitig überstehende Abschnitt der Tragplatte und das innere Käfigelement unter Bildung einer jeweiligen Rücklaufbahn für die Wälzkörper übergreift. Das äußere Käfigelement kann mit mindestens einem randseitigen Vorsprung in das innere Käfigelement eingeclipst sein. Die Verhältnisse können auch derart umgekehrt sein, dass das innere Käfigelement in das äußere Käfigelement eingeclipst ist.

Eine weitere vorteilhafte Ausführungsform sieht vor, dass die Außenflächen der Tragplatten und/oder eine Innenfläche eines das Lager umfassenden Anschlussbauteiles mit Aufnahmebohrung oder eines ringförmigen Einlegeteils dieses zweiachsig konvex gekrümmt sind, derart, dass die Position der Tragplatten selbsttätig anpassbar ist. Eine Krümmung ist diejenige um die Mittelachse des Lagers. Die andere Krümmung ist eine solche um eine zu dieser Mittelachse quer, z. B. rechtwinklig, verlaufende Achse. Die zweiachsig konvexe Krümmung ist somit als solche mit unterschiedlichen Krümmungsradien gestaltet.

Bei einer weiteren vorteilhaften Ausführungsform sind die Tragplatten mittels der Käfigelemente und diese mittels der Ringelemente und/oder der Halteelemente derart gehalten, dass vor der Montage des Lagers auf einer Welle der innere Hüllkreis des Lagers kleiner ist als der Wellendurchmesser. Bei der Montage des Linearwälzlagers auf einer Welle ergibt sich dann eine Vorspannung, durch die etwaiges unerwünschtes Spiel beseitigt ist.

Von Vorteil ist es, wenn bei in einer Aufnahmebohrung eines Aufnahmebauteils aufgenommenem Lager die Abschlussdeckel mit Halteelement radial nach außen unbeweglich abgestützt sind, während die mittels der Käfigelemente gehaltenen Tragplatten relativ dazu radial beweglich sind unter Anpassung, Ausgleich von Fluchtungsfehlern und dergleichen.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: einen schematischen axialen Längsschnitt eines Teils eines Linearwälzlagers auf einer Welle, gemäß einem ersten Ausführungsbeispiel,
- Fig. 2: einen schematischen Schnitt entlang der Linie II-II in Fig. 1,
- Fig. 3: einen schematischen Schnitt etwa entsprechend demjenigen in Fig. 2 eines Teils des Linearwälzlagers in Fig. 2 in modifizierter Ausführungsform und in größerem Maßstab,
- Fig. 4: einen schematischen axialen Längsschnitt eines Teils eines Linearwälzlagers gemäß einem zweiten Ausführungsbeispiel,
- Fig. 5: einen schematischen axialen Längsschnitt eines Teils eines Linearwälzlagers gemäß einem drittem Ausführungsbeispiel,
- Fig. 6: einen schematischen Schnitt des Endbereichs eines Teils eines Linearwälzlagers gemäß einem vierten Ausführungsbeispiel,
- Fig. 7: einen schematischen Schnitt eines Halteelements des Linearwälzlagers entsprechend einem fünften Ausführungsbeispiel,
- Fig. 8: einen schematischen Schnitt des Endteils eines Linearwälzlagers gemäß einem sechsten Ausführungsbeispiel,
- Fig. 9: einen schematischen Schnitt etwa entsprechend demjenigen in Fig. 8 gemäß einem siebten Ausführungsbeispiel,
- Fig. 10: einen schematischen Schnitt eines Teils eines Linearwälzlagers etwa entsprechend demjenigen in Fig. 9 gemäß einem achten Ausführungsbeispiel,
- Fig. 11: eine schematische stirnseitige Ansicht des Endes eines Linearwälzlagers gemäß einem neunten Ausführungsbeispiel,
- Fig. 12: eine schematische Ansicht etwa entsprechend derjenigen in Fig. 11 eines Linearwälzlagers gemäß einem zehnten Ausführungsbeispiel.

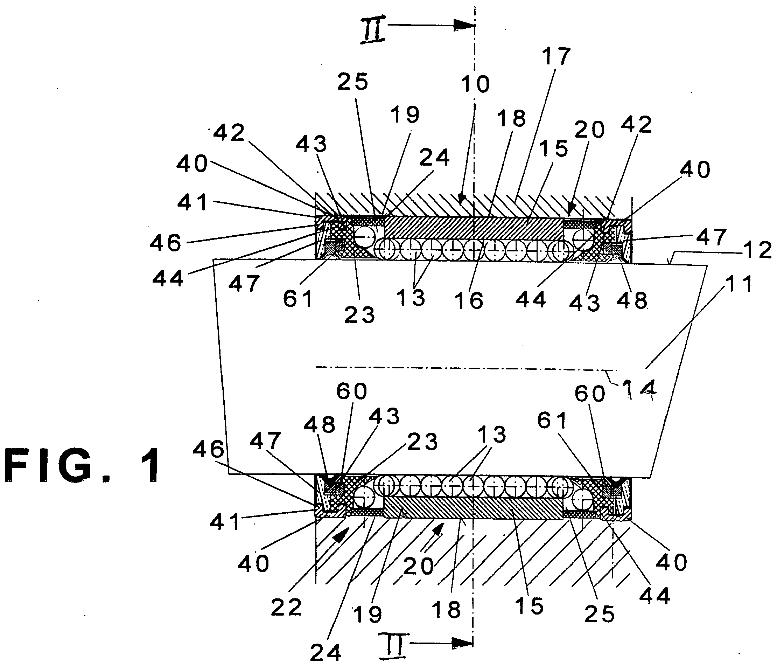

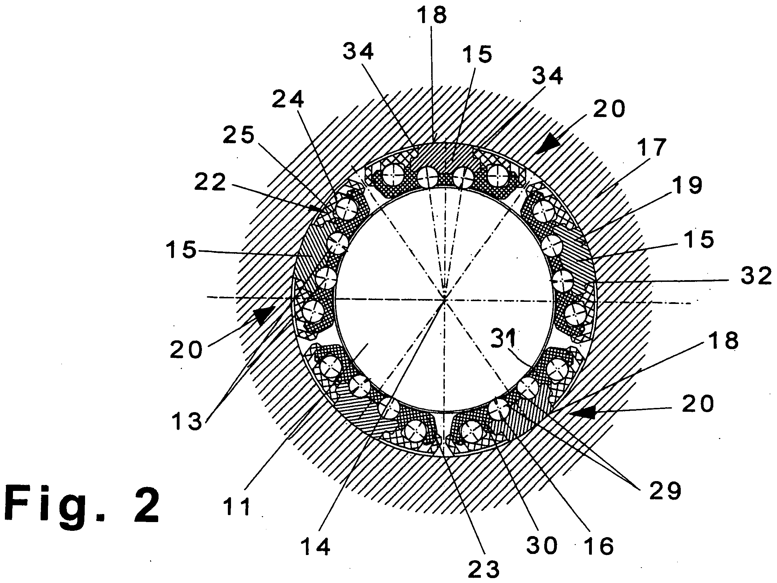

In Fig. 1 bis 3 ist schematisch ein Linearwälzlager 10 gezeigt, das hier auf einem Profil 11 in Form einer Welle angeordnet ist. Das Profil 11 weist hier z. B. Kreisquerschnitt auf, kann statt dessen aber auch einen anderen, davon abweichenden Querschnitt haben. Das Profil 11 bildet auf seiner Außenfläche 12 Laufbahnen für Wälzkörper 13 des Linearwälzlagers 10. Die Wälzkörper 13 können vielfältig gestaltet sein. Sie bestehen mit Vorteil z. B. aus Kugeln oder statt dessen aus Zylinderrollen oder Tonnenrollen od. dgl. Die Wälzkörper 13 sind in einzelnen Wälzkörperreihen angeordnet, die zur längs verlaufenden Mittelachse 14 des Lagers 10 und zueinander im wesentlichen parallel verlaufen und - im Querschnitt gemäß Fig. 2 betrachtet - entlang einem Kreis verteilt angeordnet sind. Diesen Wälzkörperreihen sind, soweit es sich um tragende Wälzkörper 13 handelt, Tragplatten 15 zugeordnet, die jeweils die Traglaufbahn 16 zumindest einer Wälzkörperreihe aufweisen und um die Mittelachse 14 in vorzugsweise gleich großen Abständen voneinander gruppiert sind. Beim gezeigten Ausführungsbeispiel sind die Tragplatten 15 doppelreihig und in der Weise gestaltet, dass diese jeweils zwei zueinander parallele Traglaufbahnen 16 aufweisen.

Die Tragplatten 15 sind zumindest auf einem Längenabschnitt in Umfangsrichtung von mindestens einem Aufnahmebauteil 17 derart umfasst, dass die Tragplatten 15 mit ihrer Außenfläche 18 des Längenabschnitts an einer zugewandten inneren Aufnahmefläche 19 z. B. Bohrung, des Aufnahmebauteils 17 anliegen.

Jede Tragplatte 15 ist mittels eines Käfigelements 22 gehalten, das hier geteilt ausgebildet ist und aus einem inneren Käfigelement 23 und einem äußeren Käfigelement 24 zusammengesetzt ist. Das Käfigelelement 22 bildet in üblicher Weise zumindest einen Teil der Führung für die in einer geschlossenen Reihe sich abwälzenden Wälzkörpers 13 im Bereich der Tragplatte 15, einer der jeweiligen Traglaufbahn 16 zugeordneten und in Umfang seitlich daneben verlaufenden Rücklaufbahn 25 und im Bereich von nicht weiter gezeigten Umlenkabschnitten, die die Rücklaufbahn 25 an jedem Ende mit der zugeordneten Traglaufbahn 16 verbinden. Die Käfigelemente 22 können sich in Umfangsrichtung über Abstandshalter gegeneinander abstützen.

Das radial innere Käfigelement 23 weist je Traglaufbahn 16 der Tragplatte 15 einen Längsschlitz 29 für die radial hindurch zur jeweiligen Traglaufbahn 16 reichenden und sich entlang dieser Traglaufbahn 16 abwälzenden Wälzkörper 13 und in Umfangsrichtung beidseitig über die Tragplatte 15 überstehende Abschnitte 30, 31 auf. Das radial äußere Käfigelement 24 übergreift diese beidseitigen überstehenden Abschnitte 30, 31 unter Komplettierung einer jeweiligen Rücklaufbahn 25. Man erkennt in Fig. 1, dass jede Tragplatte 15 innerhalb einer Längsaufnahme 32 formschlüssig aufgenommen ist, wobei diese Längsaufnahme 32 von beiden Käfigelementen 23 und 24 gebildet ist. Jede Tragplatte 15 ist mittels Randleisten 34 des äußeren Käfigelements 24 beidseitig übergriffen und gehalten.

Die Käfigelemente 22 mit Tragplatte 15 und mit den Wälzkörperreihen bilden ein Einzelsegment 20, wobei alle Einzelsegmente 20 des Linearwälzlagers 10 an beiden Enden mittels Halteelementen 40 zusammengehalten sind. Die Halteelemente 40 greifen an den stirnseitigen Enden der Käfigelemente 22 außerhalb des Umlaufbereichs der Wälzkörper 13 formschlüssig an. Sie verbinden die Einzelsegmente 20 in Umfangsrichtung zu einer selbsthaltenden Lagerbüchse miteinander und halten die Einzelsegmente 20 in diesem Verband.

Die Halteelemente 40 sind als Ringe 41 ausgebildet und greifen mit radialem Spiel von außen her formschlüssig an den Käfigelementen 22, insbesondere am inneren Käfigelement 23, an. Die Halteelemente 40 weisen einen radialen Schenkel 42 auf, der unter Belassung eines radialen Zwischenraumes, der mit 43 angedeutet ist, in eine als äußere Umfangsnut ausgebildete Eintiefung 44 der Käfigelemente 22 eingreift.

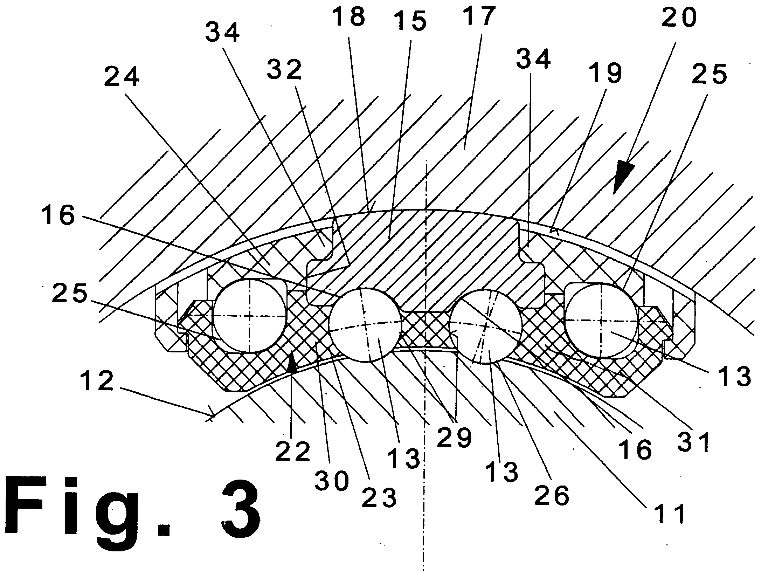

Der Außendurchmesser der Halteelemente 40 kann so groß bemessen sein wie derjenige der Käfigelemente 22 und/oder der Tragplatten 15. Vorteilhaft kann es statt dessen sein, wenn der Außendurchmesser der Halteelemente 40 größer bemessen ist als derjenige der Käfigelemente 22 und/oder der Tragplatten 15. Die äußere Umfangsfläche45 der Halteelemente 40 ist als äußere Anlagefläche für eine kraftschlüssige und/oder formschlüssige Halterung innerhalb des Aufnahmebauteils 17 für das Linearwälzlager 10 ausgebildet. Zwischen der äußeren Umfangsfläche 45 und der inneren Aufnahmefläche 19 des Aufnahmebauteils 17 herrscht Reibschluss, so dass die im Aufnahmbauteil 17 enthaltenen Einzelsegmente 20 zuverlässig gehalten sind. Auch ist sichergestellt, dass die Wälzkörper 13 im entlasteten Bereich immer Berührung zu den Traglaufbahnen 16 und den auf dem Profil 11 gebildeten Laufbahnen 26 haben, was einen besonders ruhigen Lauf ergibt und Schlupf und damit Verschleiß vermeidet. In Fig. 3 ist angedeutet, das die Laufbahnen 26 des Profils 11 z. B. als eingetiefte Rillen ausgebildet sein können.

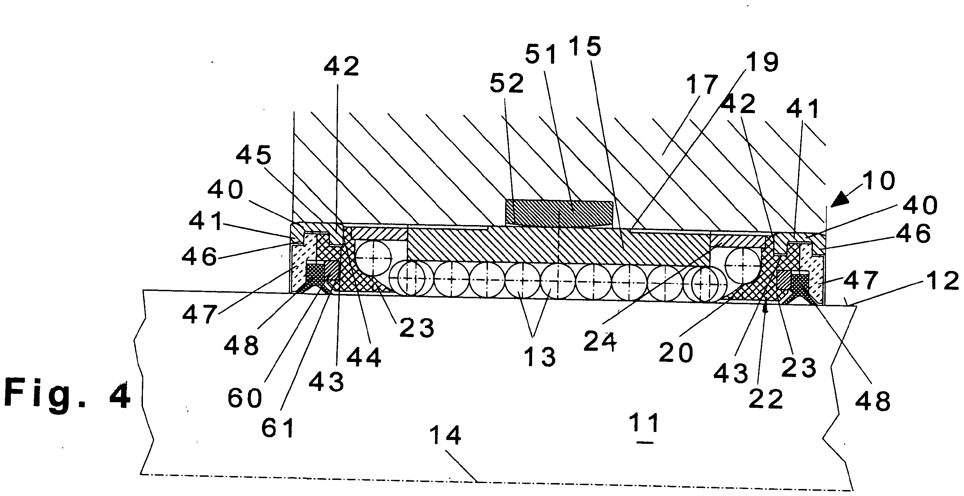

Die Halteelemente 40 sind im Querschnitt etwa U-förmig gestaltet, wie sich insbesondere aus Fig. 4 und folgenden ergibt. Sie weisen radial nach innen gerichtete Schenkel auf, von denen ein bereits beschriebener Schenkel 42 mit radialem Spiel in die als Umfangsnuten gestalteten Eintiefungen 44 der Käfigelemente 22 eingreift. Der andere Schenkel 46 übergreift vorzugsweise mit radialem Spiel endseitige Abschlussdeckel 47. Die Abschlussdeckel 47 halten und schützen einen Dichtungsring 48.

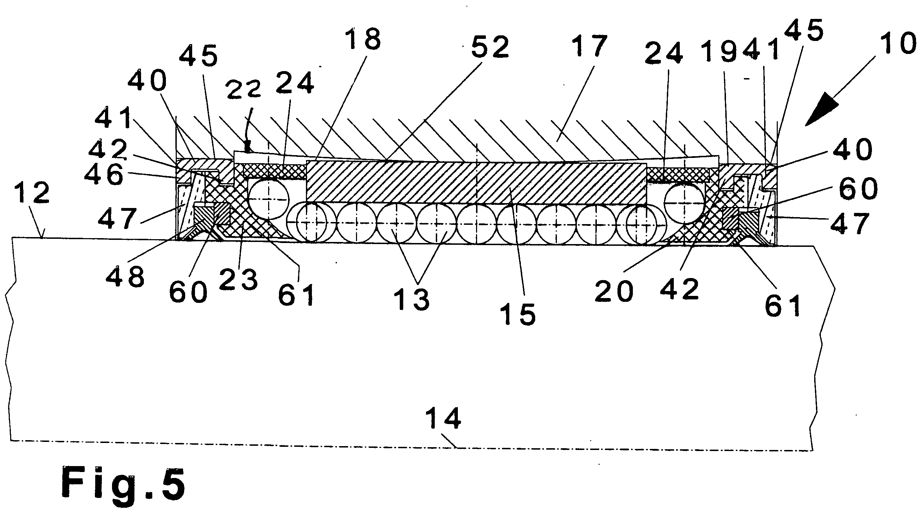

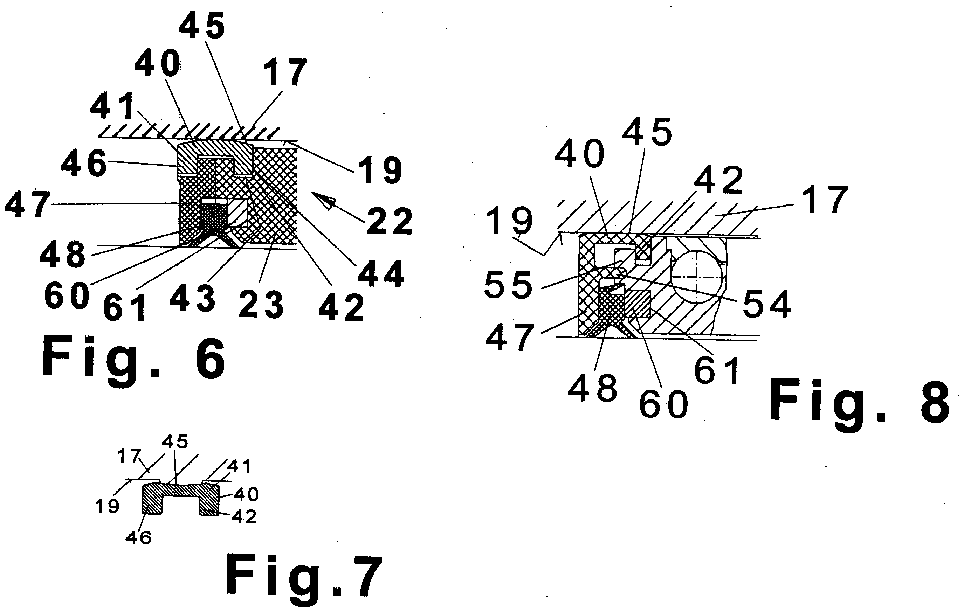

Bei den in Fig. 1 bis 5 gezeigten Ausführungsbeispielen weisen die Halteelemente 40 eine solche äußere Umfangsfläche 45 auf, die, im radialen Schnitt betrachtet, geradlinig ist, so dass eine um die Mittelachse 14 zylindrische Anlagefläche gebildet ist, die mit der entsprechenden zylindrischen inneren Aufnahmefläche 19 des Aufnahmebauteils 17 zusammenwirkt. Beim vierten Ausführungsbeipsiel gemäß Fig. 6 verläuft diese äußere Anlagefläche 45 radial nach außen konvex. Dies hat den Vorteil, dass das Einzelsegment 20 innerhalb des Aufnahmebauteils 17 um eine quer zur Mittelachse 14 verlaufende Achse schwenkbar ist und auf diese Weise eine Anpassungsmöglichkeit besteht. Bei einem nicht gezeigten anderen Ausführungsbeispiel kann der Bereich der inneren Aufnahmfläche 19 des Aufnahmebauteils 17, der dem Halteelement 40 zugeordnet ist, in Anpassung an die konvexe äußere Umfangsfläche 45 entsprechend konkav gekrümmt sein. Dann wird zwischen dem Halteelement 40 und dieser konkaven Aufnahmefläche 19 durch Formschluss eine noch bessere Halterung erzielt.

Bei dem in Fig. 7 gezeigten fünften Ausführungsbeispiel ist die äußere Umfangsfläche 45 radial nach innen konkav gekrümmt. In Anpassung daran kann der zugeordnete Bereich der inneren Aufnahmefläche 19 entsprechend radial nach innen konvex gekrümmt sein, so dass durch Eingreifen in die konkave Umfangsfläche 45 ebenfalls ein Formschluss erreicht wird, der eine erhöhte Sicherung bei dieser Verbindung gewährleistet.

Die Halteelemente 40 können aus Kunststoff bestehen oder sie sind aus Metall, vorzugsweise Stahl, gebildet.

Die endseitigen Abschlussdeckel 47, die z. B. aus Kunststoff bestehen können, liegen zumindest axial an den Käfigelementen 22 an.

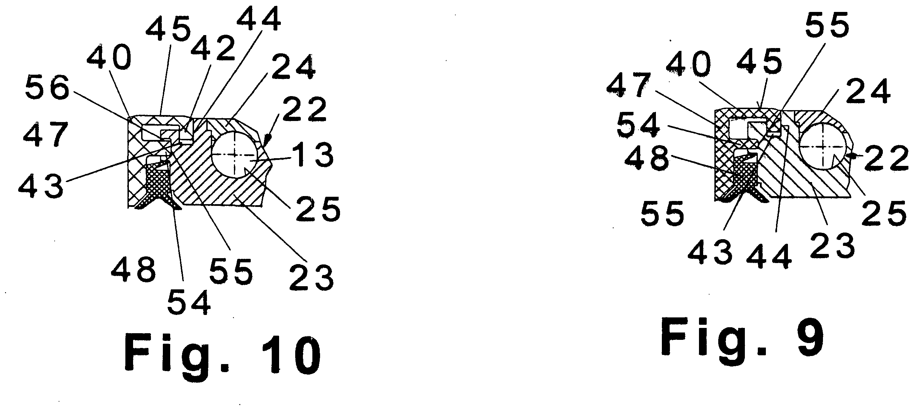

Bei den in Fig. 8 bis 10 gezeigten Ausführungsbeispielen bilden die Abschlussdeckel 47 mit den Haltelementen 40 einstückige Bauteile, die auf einem Teilbereich wie die Halteelemente 40 ausgebildet sind. Diese Halteelemente 40, insbesondere einstückigen Bauteile, weisen zumindest einen nasenartig axial vorspringenden inneren Ring 54 auf, der in eine zugeordnete stirnseitig offene Aufnahme 55, z. B. Nut, der Käfigelemente 22 eingreift, wodurch die Einzelsegmente 20 positioniert sind. Bei dem Ausführungsbeispiel gemäß Fig. 8 und 9 ist der Ring 54 in die Aufnahme 55 eingepasst. Der Ring 54 kann vorzugsweise elastisch beweglich ausgebildet sein. Beim achten Ausführungsbeispiel in Fig. 10 ist der Ring 54 unter Belassung eines radialen Zwischenraumes 56 mit radialem Spiel in der Aufnahme 55 aufgenommen. Hierbei kann der Ring 54 starr sein oder er ist ebenfalls elastisch beweglich. Der Durchmesser des jeweiligen Ringes 54 kann so gewählt werden, dass der Hüllkreis der Wälzkörper 13 gleich oder kleiner bemessen ist als der Außendurchmesser des Profils 11. Dadurch ist sichergestellt, dass auch im entlasteten Bereich die Wälzkörper 13 immer Berührung zu den Tragbahnen haben, was zu einem besonders ruhigen Lauf führt und Schlupf und damit Verschleiß verhindert. Mittels der Ringe 54 ist eine Positionierung der Einzelsegmente 20 möglich. Bei elastischer Ausbildung der Ringe 54 können auch zusätzliche Bewegungen der Einzelsegmente 20 quer zur Mittelachse 14 ermöglicht werden.

Durch die beschriebenen Maßnahmen ist eine selbsthaltende Lagerbüchse geschaffen, bei der der zur Verfügung stehende Bauraum maximal ausgenutzt ist dadurch, dass größtmögliche Wälzkörper 13 zum Einsatz kommen, die dem Linearwälzlager große Tragfähigkeit und leichtgängiges ruhiges Laufverhalten verleihen. Vorhandener Bauraum im Aufnahmebauteil 17 wird soweit wie möglich voll ausgenutzt.

Bei einem nicht gezeigten Ausführungsbeispiel sind die Außenflächen 18 der Tragplatten 15 zweiachsig konvex gekrümmt, so dass die Position der Tragplatten 15 selbsttätig anpassbar ist. Zusätzlich dazu oder statt dessen kann, wie in Fig. 4 gezeigt ist, eine Innenfläche 52 der inneren Aufnahmefläche 19 des Aufnahmebauteils 17, in den das Lager 10 eingesetzt ist, zweiachsig konvex gekrümmt sein. Diese Innenfläche ist also in Bezug auf die Mittelachse 14 gekrümmt, wobei dieser Krümmung eine solche Krümmung nach Kugelsegmentart überlagert ist, die um eine solche Achse verläuft, die quer zur Mittelachse 14 ausgerichtet ist. Bei den in Fig. 4 gezeigten Ausführungsbeispiel ist in einer Aufnahme des Aufnahmebauteils 17 ein Einlegeteil 51, insbesondere ein Ring, aufgenommen, der eine zweiachsig konvex gekrümmte Innenfläche 52 gleicher Art wie diejenige des Aufnahmebauteils 17 hat. In beiden Fällen ist die zugeordnete Außenfläche 18 der Tragplatten 15 teilzylindrisch, bezogen auf die Mittelachse 14. Aufgrund dieser zweiachsig konvexen Krümmung ist eine Einstellbewegung der Tragplatten 15 quer zur Mittelachse 14 möglich. Bei einem nicht gezeigten Ausführungsbeispiel kann der ringförmige Einlegeteil 51 als Zylinderring ausgebildet sein.

Man erkennt, dass die Tragplatten 15 mittels der Käfigelemente 22 und diese mittels der Halteelemente 40 derart gehalten sind, dass vor der Montage des Lagers 10 auf einer Welle 11 der innere Hüllkreis des Lagers z. B. kleiner ist als der Wellendurchmesser, so dass bei der Montage eine Lagervorspannung erreicht ist. Bei in der Aufnahmebohrung 19 des Aufnahmebauteils 17 aufgenommenem Lager 10 sind die Abschlussdeckel 47 mit Halteelement 40 radial nach außen unbeweglich abgestützt, während die mittels der Käfigelemente 22 gehaltenen Tragplatten 15 relativ dazu radial beweglich sind und eine selbsttätige Ausrichtung und Anpassung ermöglichen.

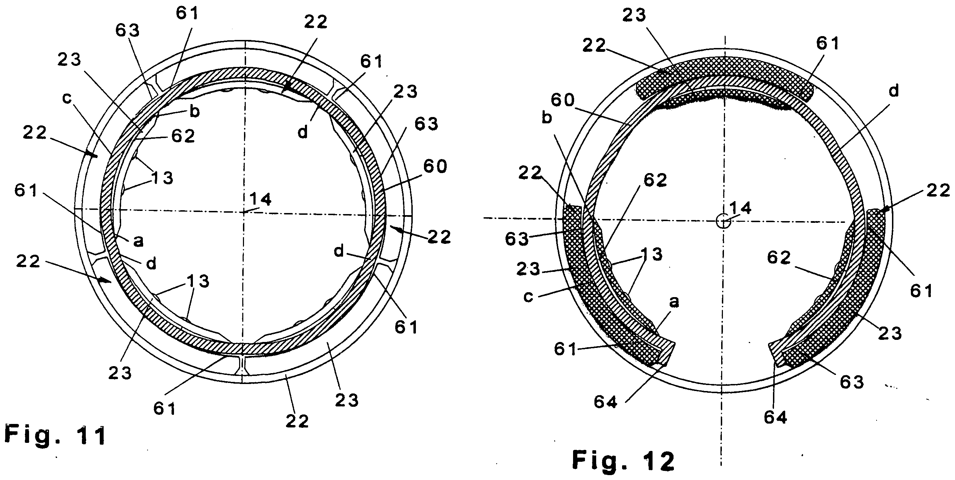

Bei dem in Fig. 11 gezeigten neunten Ausführungsbeispiel sind an den Stirnenden der Käfigelemente 22 Ringelemente 60 aus Kunststoff oder Metall vorgesehen, die von der Stirnseite her in stirnseitig offene, bogenförmig verlaufende Nuten 61 der einzelnen Käfigelemente 22 eingebracht sind. Wie sich aus Fig. 1 und folgenden ergibt, haben die Ringelemente 60 und die Nuten 61 einen vieleckigen Querschnitt, z. B. einen viereckigen Querschnitt. Bei dem in Fig. 11 gezeigten Ausführungsbeispiel sind die Ringelemente 60 geschlossen. Beim Ausführungsbeispiel gemäß Fig. 12 hingegen sind die Ringelemente 60 nicht geschlossen sondern mit endseitig umgebogenen Haken 64 versehen, die in Umfangsrichtung an den Käfigelementen 22, insbesondere den inneren Käfigelementen 23, angreifen.

Bei den Ausführungsbeispielen in Fig. 9 und 10 sind die vorgenannten Ringelemente 60 nicht vorgesehen, jedoch beim Ausführungsbeispiel in Fig. 8, bei dem die Abschlussdeckel 47 und Halteelemente 40 zu einem einstückigen Bauteil zusammengefasst sind und zumindest ein axial nach innen gerichteter Ring 54 vorgesehen ist.

Die Ringelemente 60 und/oder die Nuten 61, in die letzere eingreifen, sind derart ausgebildet, dass darüber die Käfigelemente 22 derart radial abgestützt sind, dass die Tragplatten 15 kippbeweglich sind. Dabei sind über die Ringelemente 60 und Nuten 61 die Käfigelemente 22 mit den Tragplatten 15 darin in Umfangsrichtung festgelegt. Die Käfigelemente 22 sind somit in Umfangsrichtung bleibend in Abstand gehalten. Dies geschieht gemäß Fig. 11 z. B. dadurch, dass das jeweilige Ringelement 60 etwa mit Dreipunktauflage an den Nutflanken 62, 63 der Nuten 61 der Käfigelemente 22 anliegt. Hierzu ist das jeweilige Ringelement 60 im Bereich jeder Nut 61 bei den Nutenden in Bezug auf den Nutverlauf radial nach innen gerichtet, wodurch sich eine Anlage des Ringelements 60 an der jeweiligen inneren Nutflanke 62 am Nutende ergibt. Auf dem zwischen beiden Nutenden befindlichen mittleren Nutbereich liegt das Ringelement 60 an der äußern Nutflanke 63 an. Die beiden erstgenannten Anlagepunkte an der inneren Nutflanke 62 sind mit a und b bezeichnet, während der mittlere Anlagepunkt an der äußeren Nutflanke 63 mit c bezeichnet ist. Ferner ist das jeweilige Ringelement 60 auf dem Umfangsbereich, der sich zwischen zwei benachbarten Käfigelementen 22 erstreckt, in radialer Richtung aus dem Kreisverlauf herausgebogen. Diese herausgebogenen Stellen der Ringelemente 60 sind mit d bezeichnet. Die Ringelemente 60 sind im wesentlichen spannungsfrei in die zugeordneten Nuten 61 eingelegt. Die Ringelemente 60 sind entweder zusätzlich zu den Ringen 54 (Fig. 8) vorgesehen oder statt dieser, wie es sich aus Fig. 1 bis 6 ergibt.

Man erkennt, dass die Einzelsegmente 20 voneinander unabhängig einstellbar sind, wobei beim bestimmungsgemäßen Gebrauch die Last exakt auf die einzelnen Laufbahnen und Wälzkörperreihen verteilt wird. Dabei ergeben sich Linearwälzlager 10 in Form selbsthaltender Lagerbüchsen, bei denen der vorhandene Bauraum so gut wie möglich ausgenutzt werden kann. Über die Halteelemente 40 wird stirnseitig axial vor den umlaufenden Wälzkörpern 13 die Befestigung durch Reibschluss und/oder Formschluss im Aufnahmebauteil 17 sichergestellt. Eine kraftschlüssige Befestigung ergibt sich dann, wenn der Außendurchmesser der Halteelemente 40 größer bemessen wird als der Innendurchmesser der Aufnahmebohrung im Aufnahmebauteil 17. Statt dessen oder zusätzlich dazu kann eine formschlüssige Befestigung noch durch konkave oder konvex gekrümmte, miteinander zusammenwirkenden Flächenformen erreicht werden, wodurch sich eine zusätzliche Sicherung ergibt. Die Anzahl der Bauteile wird in vorteilhafter Weise dann reduziert, wenn die Halteelemente 40 und die Abschlussdeckel 47 zu einem einstückigen Bauteil vereint sind, das beim entsprechenden Bereich wie die Halteelemente 40 ausgebildet ist und z. B. einen axial nach innen vorspringenden nasenartigen Ring 54 aufweisen. Dadurch können die Käfigelemente 22 in radialer Richtung zusätzlich positioniert werden. Bei elastischer Gestaltung der Ringe 54 sind auch zusätzliche Bewegungen der Käfigelemente 22 quer zur Mittelachse 14 möglich. Dem dient ferner auch das radiale Spiel zwischen den Halteelementen 40 und den Käfigelementen 22, das durch den radialen Zwischenraum 43 zwischen den Schenkeln 42 in der nutförmigen Eintiefung 44 erreicht wird. Anstelle der Ringe 54 oder zusätzlich dazu ermöglichen auch die Ringelemente 60 in den Nuten 61 Bewegungen der Käfigelemente 22 parallel zur Mittelachse 14 und zur Querachse.

## Patentansprüche

1. Linearwälzlager, bestehend aus mehreren Einzelsegmenten (20) mit jeweiligen um die Mittelachse (14) des Lagers (10) gruppierten Tragplatten (15) mit Traglaufbahnen (16) und mit im Querschnitt entlang einem Bogen verteilt angeordneten, zueinander und zur Mittelachse (14) des Lagers (10) im wesentlichen parallelen Wälzkörperreihen und mit Käfigelementen (22), in denen die Tragplatten (15) gehalten sind und die für die Führung der in einer geschlossenen Reihe sich abwälzenden Wälzkörper (13) ausgebildet sind, wobei die Einzelsegmente (20) mittels Halteelementen (40) zusammengehalten sind, die als Ringe (41) ausgebildet sind und die Einzelsegmente (20) in Umfangsrichtung zu einer selbsthaltenden Lagerbüchse miteinander verbinden und halten.
**dadurch gekennzeichnet,**
**dass** die Halteelemente (40) an den stirnseitigen Enden der Käfigelemente (22) außerhalb des Umlaufbereichs der Wälzkörper (13) mit radialem Spiel formschüssig radial von außen her an den Käfigelementen (22) angreifen und mit einem radialen Schenkel (42) unter Belassung eines radialen Zwischenraumes (43) in eine als äußere Umfangsnut ausgebildete Eintiefung (44) der Käfigelemente (22) eingreifen.

2. Linearwälzlager nach Anspruch 1,
**dadurch gekennzeichnet,**
**dass** der Außendurchmesser der Halteelemente (40) größer bemessen ist als derjenige der Käfigelemente (22) und/oder der Tragplatten (15).

3. Linearwälzlager nach Anspruch 1 oder 2,
**dadurch gekennzeichnet,**
**dass** die Haltelemente (40) im Querschnitt etwa U-förmig sind mit radial nach innen weisenden Schenkeln (42, 46), von denen einer (42) vorzugsweise mit radialem Spiel in die Umfangsnuten (44) der Käfigelemente (22) eingreift und der andere (46) vorzugsweise mit radialem Spiel endseitige Abschlussdeckel (47) übergreift, die vorzugsweise zumindest axial an den Käfigelementen (22) anliegen

4. Linearwälzlager nach einem der Ansprüche 1 bis 3,
**dadurch gekennzeichnet,**
**dass** die Halteelemente (40) eine solche äußere Umfangsfläche (45) aufweisen, die, im radialen Schnitt betrachtet, geradlinig oder radial nach außen konvex oder radial nach innen konkav gekrümmt ist.

5. Linearwälzlager nach einem der Ansprüche 1 bis 4,
**dadurch gekennzeichnet,**
**dass** die äußere Umfangsfläche (45) der Halteelemente (40) als äußere Anlagefläche für eine kraftschlüssige und/oder formschlüssige Halterung innerhalb eines Aufnahmebauteils (71) für das Linearwälzlager (10) ausgebildet ist.

6. Linearwälzlager nach Anspruch 5,
**dadurch gekennzeichnet,**
**dass** die konvex gekrümmte äußere Umfangsfläche (45) der Halteelemente (40) in zugeordnete konkav gekrümmte Aufnahmeflächen bzw. die konkav gekrümmten äußeren Umfangsflächen (45) der Halteelemente (40) in zugeordnete konvex gekrümmte Aufnahmeflächen innerhalb eines Aufnahmebauteils (17) eingreifen.

7. Linearwälzlager nach einem der Ansprüche 4 bis 6,
**dadurch gekennzeichnet,**
**dass** die Abschlussdeckel (47) mit den Halteelementen (40) einstückige Bauteile bilden und auf einem Teilbereich wie die Halteelemente (40) ausgebildet sind.

8. Linearwälzlager nach einem der Ansprüche 1 bis 7,
**dadurch gekennzeichnet,**
**dass** die Halteelemente (40), insbesondere die einstückigen Bauteile, nasenartig axial vorspringende innere Ringe (54) aufweisen, die vorzugsweise mit radialem Spiel in stirnseitige offene Aufnahmen (55), z. B. Nuten, der Käfigelemente (22) eingreifen und die Einzelsegmente (20) positionieren, und vorzugsweise, dass die Ringe (54) starr oder vorzugsweise elastisch beweglich ausgebildet sind.

9. Linearwälzlager, nach einem der Ansprüche 1 bis 8,
**dadurch gekennzeichnet,**
**dass** an den Stirnenden der Käfigelemente (22) Ringelemente (60) aus Kunststoff oder Metall vorgesehen sind, die von der Stirnseite her in stirnseitig offene, bogenförmig verlaufende Nuten (61) der Käfigelemente (22) eingebracht sind.

10. Linearwälzlager nach Anspruch 9,
**dadurch gekennzeichnet,**
**dass** die Ringelemente (60) und/oder die Nuten (61) derart ausgebildet sind, dass darüber die Käfigelemente (22) derart radial abgestützt sind, dass die Tragplatten (15) kippbeweglich sind.

11. Linearwälzlager nach Anspruch 9 oder 10,
**dadurch gekennzeichnet,**
**dass** die Ringelemente (60) und/oder Nuten (61) derart ausgebildet sind, dass darüber die Käfigelemente (22) mit den Tragplatten (15) in Umfangsrichtung festgelegt sind.

12. Linearwälzlager nach einem der Ansprüche 9 bis 11,
**dadurch gekennzeichnet,**
**dass** das jeweilige Ringelement (60) etwa mit Dreipunktauflage an den Nutflanken (62, 63) der zugeordneten Nut (61) anliegt.

13. Linearwälzlager nach einem der Ansprüche 9 bis 12,
**dadurch gekennzeichnet,**
**dass** das jeweilige Ringelement (60) in den Nuten (61) der einzelnen Käfigelemente (22) im Bereich der beiden Nutenden in Bezug auf den Nutverlauf radial nach innen gerichtet ist und an den inneren Nutflanken (62) anliegt und auf dem zwischen beiden Nutenden befindlichen mittleren Bereich an den äußeren Nutflanken (63) anliegt.

14. Linearwälzlager nach einem der Ansprüche 9 bis 13,
**dadurch gekennzeichnet,**
**dass** das jeweilige Ringelement (60) auf dem Umfangsbereich zwischen zwei benachbarten Käfigelementen (22) in radialer Richtung aus einem Kreisverlauf herausgebogen ist.

## Claims

1. A linear roller bearing consisting of a plurality of individual segments (20) comprising support plates (15) each grouped around the central axis (14) of the bearing (10), said support plates having bearing raceways (16), and comprising roller body rows arranged distributed along an arc and arranged substantially parallel in relation to one another and in relation to the central axis (14) of the bearing (10) when seen in cross section, and comprising cage elements (22) in which the support plates (15) are held and which are designed to guide rolling elements (13) rolling in a closed row, wherein the individual segments (20) are held together by means of retaining elements (40), wherein the retaining elements (40) are designed as rings (41) and mutually connect and hold the individual segments (20) in circumferential direction into a self-supporting bearing bushing,
**characterized in that** the retaining elements (40) positively engage, radially from the outside, on the cage elements (22) at the end-face ends of the cage elements (22) outside the circumferential area of the rolling elements (13) with radial play and with a radial limb (42), leaving a radial clearance (43), into a recess (44) of the cage elements (22), said recess designed as an outer circumferential groove.

2. The linear roller bearing according to claim 1, **characterized in that** the outer diameter of the retaining elements (40) is larger than that of the cage elements (22) and / or of the support plates (15).

3. The linear roller bearing according to claim 1 or 2, **characterized in that** the retaining elements (40) are approximately U-shaped in cross-section with radially inwardly projecting limbs (42, 46), one (42) of which preferably projects radially into the circumferential grooves (44) of the cage elements (22) with radial play, and the other (46) one preferably encompassing end caps (47) ending at the ends with radial play, which end caps preferably rest at least axially against the cage elements (22).

4. The linear roller bearing according to one of claims 1 to 3, **characterized in that** the retaining elements (40) have such an outer circumferential surface (45), which, viewed in radial section, is straight-lined or curved convexly radially outwards or curved concavely radially inward.

5. The linear roller bearing according to one of claims 1 to 4, **characterized in that** the outer circumferential surface (45) of the retaining elements (40) is designed as an external contact surface for a non-positive and / or a positive fit mounting within a receiving component (71) for the linear roller bearing (10).

6. The linear roller bearing according to claim 5, **characterized in that** the convexly curved outer circumferential surface (45) of the retaining elements (40) engage into assigned concavely curved receiving surfaces or the concavely curved outer circumferential surfaces (45) of the retaining elements (40) engage into assigned convexly curved receiving surfaces within a receiving component (17).

7. The Linear roller bearing according to one of claims 4 to 6, **characterized in that** the end covers (47) form integral parts with the holding elements (40) and are designed in a partial region like the retaining elements (40).

8. The linear roller bearing according to one of claims 1 to 7, **characterized in that** the retaining elements (40), in particular the one-piece components, have axially protruding, nose-like inner rings (54) which preferably engage with radial play in end-sided open receptions (55), such as grooves for instance, of the cage elements (22) and position the individual segments (20), and preferably that the rings (54) are designed to be rigid or preferably elastically movable.

9. The linear roller bearing according to one of claims 1 to 8, **characterized in that** ring elements (60) made of plastic or metal are provided on the end faces of the cage elements (22), which ring elements are introduced from the end-face direction into end-face sided open, arcuated grooves (61) of the cage elements (22).

10. The linear roller bearing according to claim 9, **characterized in that** the ring elements (60) and / or the grooves (61) are designed in such a way that the cage elements (22) are radially supported therewith in such a way that the carrier plates (15) are tiltable.

11. The linear roller bearing according to claim 9 or 10, **characterized in that** the ring elements (60) and / or grooves (61) are designed such that the cage elements (22) with the support plates (15) are fixed in the circumferential direction.

12. The Linear roller bearing according to one of Claims 9 to 11, **characterized in that** the respective ring element (60) rests on the groove flanks (62, 63) of the associated groove (61) by means of three-point support approximately.

13. The linear roller bearing according to one of Claims 9 to 12, **characterized in that** the respective ring element (60) in the grooves (61) of the individual cage elements (22) is directed radially inwards in the region of the two groove ends with respect to the groove course (62) and it bears on the inner groove flanks (62) and it bears against the outer groove flanks (63) in the middle region located between the two ends of the groove.

14. The Linear roller bearing according to one of Claims 9 to 13, **characterized in that** the respective ring element (60) is bent out of a circular course in the radial direction on the circumferential region between two adjacent cage elements (22).

## Revendications

1. Palier à roulement linéaire, constitué de plusieurs segments individuels (20) comprenant à chaque fois des plaques de support (15) regroupées autour de l'axe médian (14) du palier (10), avec des chemins de roulement de support (16) et des rangées de corps de roulement essentiellement parallèles les unes aux autres et à l'axe médian (14) du palier (10), réparties le long d'une courbe en section transversale et avec des éléments de cage (22) dans lesquels sont retenues les plaques de support (15) et qui sont réalisés pour le guidage des corps de roulement (13) roulant dans une rangée fermée, les segments individuels (20) étant retenus au moyen d'éléments de retenue (40) qui sont réalisés sous forme de bagues (41) et qui relient les uns aux autres et retiennent les segments individuels (20) dans la direction périphérique pour former une douille de palier autorétentive,
**caractérisé en ce que**
les éléments de retenue (40) viennent en prise au niveau des extrémités frontales des éléments de cage (22) à l'extérieur de la région périphérique des corps de roulement (13) avec un jeu radial par engagement par correspondance de formes radialement depuis l'extérieur avec les éléments de cage (22) et s'engagent avec une branche radiale (42) en laissant un espace intermédiaire radial (43) dans un renfoncement (44) des éléments de cage (22) réalisé sous forme de rainure périphérique extérieure.

2. Palier à roulement linéaire selon la revendication 1,
**caractérisé en ce que**
le diamètre extérieur des éléments de retenue (40) est dimensionné de manière à être plus grand que celui des éléments de cage (22) et/ou des plaques de support (15).

3. Palier à roulement linéaire selon la revendication 1 ou 2,
**caractérisé en ce que**
les éléments de retenue (40) présentent une forme en section transversale approximativement en forme de U avec des branches (45, 46) tournées radialement vers l'intérieur, dont l'une (42) s'engage de préférence avec un jeu radial dans les rainures périphériques (44) des éléments de cage (22) et dont l'autre (46) vient en prise de préférence avec un jeu radial par-dessus des couvercles de terminaison (47) du côté de l'extrémité, qui s'appliquent de préférence au moins axialement contre les éléments de cage (22).

4. Palier à roulement linéaire selon l'une quelconque des revendications 1 à 3,
**caractérisé en ce que** les éléments de retenue (40) présentent une surface périphérique extérieure (45), considérée en coupe radiale, qui est rectiligne ou qui présente une courbure convexe radialement vers l'extérieur ou concave radialement vers l'intérieur.

5. Palier à roulement linéaire selon l'une quelconque des revendications 1 à 4,
**caractérisé en ce que** la surface périphérique extérieure (45) des éléments de retenue (40) est réalisée sous forme de surface d'appui extérieure pour une fixation par engagement par force et/ou par correspondance de formes à l'intérieur d'un composant de réception (71) pour le palier à roulement linéaire (10).

6. Palier à roulement linéaire selon la revendication 5,
**caractérisé en ce que**
la surface périphérique extérieure de courbure convexe (45) des éléments de retenue (40) s'engage dans des surfaces de réception de courbure concave associées ou les surfaces périphériques extérieures de courbure concave (45) des éléments de retenue (40) s'engagent dans des surfaces de réception de courbure convexe associées à l'intérieur d'un composant de réception (17).

7. Palier à roulement linéaire selon l'une quelconque des revendications 4 à 6,
**caractérisé en ce que**
les couvercles de terminaison (47) forment avec les éléments de retenue (40) des composants d'une seule pièce et sont réalisés sur une région partielle comme les éléments de retenue (40).

8. Palier à roulement linéaire selon l'une quelconque des revendications 1 à 7,
**caractérisé en ce que**
les éléments de retenue (40), en particulier les composants d'une seule pièce, présentent des bagues intérieures (54) faisant saillie axialement en forme de nez, qui s'engagent de préférence avec un jeu radial dans des évidements ouverts du côté frontal (55), par exemple des rainures, des éléments de cage (22) et positionne les segments individuels (20), et de préférence **en ce que** les bagues (54) sont réalisées sous forme rigide ou de préférence déplaçable élastiquement.

9. Palier à roulement linéaire selon l'une quelconque des revendications 1 à 8,
**caractérisé en ce que**
des éléments annulaires (60) en plastique ou en métal sont prévus au niveau des extrémités frontales des éléments de cage (22), lesquels sont introduits depuis le côté frontal dans des rainures (61) s'étendant en forme d'arc, ouvertes du côté frontal, des éléments de cage (22).

10. Palier à roulement linéaire selon la revendication 9,
**caractérisé en ce que**
les éléments annulaires (60) et/ou les rainures (61) sont réalisés de telle sorte que les éléments de cage (22) soient supportés radialement par le biais de ceux-ci de telle sorte que les plaques de support (15) puissent être basculées.

11. Palier à roulement linéaire selon la revendication 9 ou 10,
**caractérisé en ce que**
les éléments annulaires (60) et/ou les rainures (61) sont réalisés de telle sorte que les éléments de cage (22) soient fixés par le biais de ceux-ci aux plaques de support (15) dans la direction périphérique.

12. Palier à roulement linéaire selon l'une quelconque des revendications 9 à 11,
**caractérisé en ce que**
l'élément annulaire respectif (60) s'applique approximativement avec un appui à trois points contre les flancs de rainure (62, 63) de la rainure associée (61).

13. Palier à roulement linéaire selon l'une quelconque des revendications 9 à 12,
**caractérisé en ce que**
l'élément annulaire respectif (60) dans les rainures (61) des éléments de cage individuels (22) dans la région des deux extrémités de rainure est orienté radialement vers l'intérieur par rapport à l'allure de la rainure et s'applique contre les flancs de rainure intérieurs (62) et s'applique contre les flancs de rainure extérieurs (63) au niveau de la région centrale se trouvant entre les deux extrémités de rainure.

14. Palier à roulement linéaire selon l'une quelconque des revendications 9 à 13,
**caractérisé en ce que**
l'élément annulaire respectif (60) est recourbé vers l'extérieur dans la direction radiale à partir d'une alerte circulaire sur la région périphérique entre deux éléments de cage adjacents (22).
